# EUROPÄISCHE PATENTSCHRIFT

(11) **EP 0 743 134 B1**
(45) Veröffentlichungstag und Bekanntmachung des Hinweises auf die Patenterteilung: **21.02.2001**
(21) Anmeldenummer: 96105983.9
(22) Anmeldetag: 17.04.1996
(51) Int. Cl.: B23K 37/047, B23K 26/08

(54) **Verfahren und Vorrichtung zum Verbinden von zwei Werkstücken**
Process and device for bonding two workpieces
Procédé et dispositif pour joindre deux pièces

(30) Priorität: 15.05.1995 CH 140995
(43) Veröffentlichungstag der Anmeldung: 20.11.1996
(73) Patentinhaber: ELPATRONIC AG, 8962 Bergdietikon (CH)
(72) Erfinder: Aebersold, Hans, 8903 Birmensdorf (CH); Urech, Werner, 8434 Kaiserstuhl (CH); Gross, Norbert, 8004 Zürich (CH)

(56) Entgegenhaltungen:
- EP-A- 0 438 615
- EP-A- 0 532 853
- EP-A- 0 565 088
- EP-A- 0 565 846
- EP-B- 0 234 346
- EP-B- 0 583 999
- US-A- 3 743 813
- US-A- 4 811 936
- US-A- 5 328 083
- US-A- 5 357 077

## Beschreibung

Die Erfindung betrifft ein Verfahren zum Verbinden von zwei Werkstücken durch eine Schweissnaht, wobei die Werkstücke zwischen gegeneinander laufenden, aus einer Mehrzahl von Gliedern bestehenden Raupen gehalten werden, welche Umlenkrollen in lediglich einer Förderrichtung umlaufen, sowie eine Vorrichtung hierfür.

Zum Verbinden von zwei Werkstücken, insbesondere bei der Herstellung von Karosserieteilen im Automobilbau, sind verschiedene Schweissverfahren bekannt. Zu erwähnen ist hier vor allem das Laserschweissen, wo die Blechteile in Stumpflage zu Platinen verschweisst werden.

Natürlich sind die miteinander zu verschweissenden Kanten der Bleche nicht absolut gerade, sondern besitzen eine gewisse Welligkeit. Entsprechend ist die Stossfuge nur dort geschlossen, wo sich aufgrund der Welligkeit die Kanten berühren; an anderen Stellen weichen die Kanten voneinander zurück, dort ist die Stossfuge offen. Beim Laserschweissen soll nun die Stossfuge nach Industriestandard in Europa eine Breite von 0,08 mm nirgends überschreiten. Diese sehr geringe zulässige Abweichung bedingt, dass die Kanten der zu verschweissenden Bleche vorbereitet werden. In der Regel wird dies durch ein Vorschneiden mittels Laserstrahl erreicht. Es ist aber auch durch ein Verfahren gemäss EP-A 0 565 846 erreichbar, wo die Bleche im Stumpfstoss positioniert und dann mindestens eine Kante plastisch gegen die andere hin verformt wird, sodass sich die Fuge schliesst, soweit, dass ihre grösste Breite 0,08 mm nicht mehr überschreitet. Der Laserstrahl mit einem üblichen Fokus von 0,2mm überstreicht dann stets in der gewünschten Art beide der stumpf aneinanderstossenden Kanten.

Ein Schweissvorgang spielt sich in der Regel wie folgt ab:

Die Werkstücke werden paarweise, ohne vorbereitete Kanten, in Stumpflage und ohne wesentlichen Seitendruck positioniert und durch Klemmelemente fixiert. Hier findet eine erste Kraftbeeinflussung der Werkstücke statt. Jetzt können die Werkstücke weiterbehandelt, beispielsweise wie in der EP-A 0 565 846 beschrieben, geglättet werden, um die Stossfuge auf das zulässige Mass zu schliessen. Diese Weiterbehandlung bewirkt eine zweite Kraftbeeinflussung der Positionierung, wo erhebliche Seitenkräfte auftreten können. Schlussendlich kommt es infolge von Wärmespannungen beim Laserschweissen zu weiteren, insbesondere seitlich wirkenden Krafteinflüssen.

Diese Krafteinflüsse sind geeignet, die Stossfuge zu beeinflussen, insbesondere dann, wenn die Toleranzen in der Maschine eine Relativbewegung der zu verschweissenden Bleche zulassen.

Aus der US-A-5,328,083 ist eine Anlage zum Verbinden von Werkstücken mittels eines Laserstrahls bekannt, wobei diese Anlage in vier Zonen aufgeteilt ist. In der ersten Zone wird ein erstes Werkstück positioniert. In der zweiten Zone wird ein zweites Werkstück seitlich an das erste Werkstück herangeführt, bis beide Werkstücke eine Stossfuge ausbilden. In einer dritten Zone werden dann die Werkstücke zusammen einer Schweissstation zugeführt, d.h., unter einem Laserstrahl entlang geführt. Hierbei werden die beiden Werkstücke durch eine Schweissnaht miteinander verbunden. In einer vierten Zone erfolgt dann ein Austrag der beiden miteinander verschweissten Werkstücke.

Die Führung des ersten Werkstückes durch die zweite und dritte Zone und die Führung des zweiten Werkstückes durch einen Teil der zweiten und die dritte Zone geschieht zwischen gegeneinander laufenden Raupen. Diese laufen mit gleicher Geschwindigkeit, so dass auch die Zuführung der Werkstücke zu den Raupen mit gleicher Geschwindigkeit geschieht. Dabei werden die Werkstücke von den Raupen erfasst und "mitgerissen". Dies geschieht auf recht unsanfte Art, da die Klemmung geeignet sein muss, die oben genannten Seitenkräfte aufzunehmen und entsprechend mit grossen Kräften arbeitet entstehen Positionsprobleme durch Relativverschiebung der Bleche bis diese von der Raupe vollständig erfasst.

EP 532 883 zeigt eine Vorrichtung zum Verschweissen von Werkstücken, welche auf einem die Schweissstation durchfahrenden Wagen fest angeordnet werden. Dabei werden die Werkstücke von der Seite herauf den zu beladenden Wagen gebraucht, gegeneinander positioniert und durch Hubbalken festgelegt. Dieses Prinzip besitzt den Nachteil, dass Totzeiten mindestens beim Be- und Entladen des Wagens auftreten, was die Tauglichkeit der Vorrichtung in der Massenproduktion vermindert.

Da zuerst das eine und danach das zweite Werkstück positioniert und gegenüber dem ersten Werkstück ausgerichtet wird, ist ferner die Baulänge der Anlage recht lang. Weiter müssen die Werkstücke einen gewissen Abstand zueinander einhalten, was wiederum die unproduktiven Nebenzeiten, in denen nicht geschweisst werden kann, erhöht. Abhilfe könnte hier in geringem Umfang dadurch geschaffen werden, dass das vorgeschaltete Zuführband schneller läuft. Dabei ergeben sich aber gesteigerte Übergabeschwierigkeiten.

Der vorliegenden Erfindung liegt die Aufgabe zugrunde, eine Vorrichtung und ein Verfahren der o.g. Art zu schaffen, mittels welchen die Werkstücke gegenüber dem Laser exakt geführt werden können, ohne dass die Stossfuge gestört wird, sobald die Werkstücke nebeneinander positioniert worden sind. Ferner soll ein kontinuierlicher Raupenbetrieb mit wenig unproduktiven Nebenzeiten gewährleistet sein und die Anlage möglichst wenig Platz beanspruchen.

Zur Lösung dieser Aufgabe führt, dass ein Abstand des in Förderrichtung ersten Abschnittes der Raupen beim Einführen der Werkstücke zwischen die Raupen verändert wird.

Hierdurch ist ein Einführen der Werkstücke zwischen die Raupen wesentlich erleichtert und kann wesentlich sanfter vonstatten gehen. Dadurch, dass der Abstand im ersten Abschnitt der Raupen variiert werden kann, öffnen sich diese wie ein Maul, so dass die Werkstücke vollständig zwischen die Raupen eingeschoben werden können. Bevorzugt geschieht dies so tief, dass die nachfolgenden Werkstücke nahe an die hintere Randkante der gerade zu bearbeitenden Werkstücke herangeführt werden. Befinden sich die Werkstücke zwischen den Raupen, wird der Abstand wieder zurückgenommen; die Klemmung der Werkstücke erfolgt dann auf deren gesamter Länge auf einmal, so dass eine Relativverschiebung zwischen den Werkstücken unterbleibt.

In einem Ausführungsbeispiel ist der eigentlichen Schweissstation mit den Raupen und der Schweisseinrichtung eine Zuführeinrichtung zugeordnet, welche die Werkstücke zwischen die Raupen bringt. Diese Zuführeinrichtung kann der Einfachheit halber aus einer Zange mit einem Horizontalschlitz bestehen, in welchen die Werkstücke eingeschoben werden. In dem Schlitz befinden sich notwendige Klemmelemente zum Halten der Werkstücke.

Dabei ist der Einfachheit halber vorgesehen, dass Ablagerollen beidseits des Horizontalschlitzes vorgesehen sind, auf denen die Werkstücke abgelegt werden. Danach werden die Werkstücke zueinander in den Schlitz hineingeschoben, bis sie sich im Bereich der Stossfuge berühren. Nun erfolgt ein Klemmen der Werkstücke und ein Verfahren der Zuführeinrichtung in Richtung auf die Schweissstation.

Zur Verringerung der Stossfuge hat sich gemäss der EP-A-0 565 846 eine Profilierrolle als sehr wirkungsvoll herausgestellt, welche ein- oder beidseits der Stossfuge in den Werkstücken eine Kerbnut od.dgl. Profilnut erzeugt. Im vorliegenden Ausführungsbeispiel ist diese Profilierrolle der Zuführeinrichtung zugeordnet, sie kann allerdings auch in der Schweisstation der Schweisseinrichtung vorgeschaltet sein. Ist sie der Zuführeinrichtung zugeordnet, so übt sie ihre Tätigkeit bevorzugt beim Ausstossen bzw. Herausziehen der Werkstücke aus dem Horizontalschlitz aus.

In einem bevorzugten Ausführungsbeispiel werden die Raupen zwischen zwei Schweissvorgängen mit einer von der Schweissgeschwindigkeit unterschiedlichen, bevorzugt höheren Geschwindigkeit betrieben. Das bedeutet eine schnellere Überbrückung der Zeit, in der nicht geschweisst wird. In dieser Zeit ist auch daran gedacht, die Werkstücke zwischen die Raupen mit einer schnelleren Geschwindigkeit als die Schweissgeschwindigkeit einzuführen und aus den Raupen zu entnehmen. Dies wird noch dadurch begünstigt, wenn der Raupenabstand, wie oben beschrieben, verändert wird. Vor allem soll dieses Verfahren bei Werkstücken durchgeführt werden, deren Teile-Länge grösser ist, als die eigentliche Schweissnaht, da hierdurch die "unproduktive" Zeit ohne Erzeugung einer Schweissnaht verkürzt wird.

Die Raupen ähneln Panzerketten, wobei bevorzugt zwei Raupen übereinander angeordnet sind und zwischen diesen Raupen jeweils das Werkstück geführt ist. Da es sich im vorliegenden Falle um zwei Werkstücke handelt, sind zwei Paare derartiger Raupen vorgesehen, die nebeneinander angeordnet sind.
Diese Raupen haben den Vorteil, dass sie eine kontinuierliche Förderung der zu verbindenden Werkstücke in dicht gestaffelter Reihenfolge erlauben. Die Werkstücke werden an einem Ende zwischen die Raupen eingeführt und am anderen Ende entnommen. Hierdurch findet keine Störung von neu aufgegebenen Werkstücken durch bereits verschweisste Werkstücke statt.

Wesentlich ist, dass die Werkstücke exakt ausgerichtet gehalten werden. Hierzu ist ein erheblicher Druck notwendig, mit dem die Raupen auf die Werkstücke drücken, damit sich diese nicht zwischen den Raupen in irgend einer Richtung verschieben. Deshalb weist jede Raupe eine Mehrzahl von Gliedern auf, die auf die Werkstücke drücken. Der Druck kann dabei durch eine beliebige hydraulische oder pneumatische Einrichtung erzeugt und je Glied unterschiedlich ausgelegt werden. Dabei sollte der Druck so hoch sein, dass auch einer Welligkeit der Werkstücke entgegengewirkt wird, welche durch die von der Schweissnaht ausgehende Wärme entstehen kann.

Um die Stossfuge zwischen den Werkstücken so gering wie möglich zu halten,ist daran gedacht, die einzelnen Glieder so anzustellen, dass die Werkstücke eine Bewegungstendenz zueinander erhalten. Dies kann beispielsweise dadurch geschehen, dass die Glieder in einem gewissen Winkel zur Förderrichtung angestellt werden, so dass die Werkstücke gegeneinander schieben. Möglich ist auch, dass durch entsprechende Schikanen, Kulissen oder externe Krafteinwirkungen quer zur Schweissvorrichtung die Glieder und damit auch die Werkstücke quer bzw. senkrecht zur Förderrichtung verschoben werden. Hierdurch werden die Stossfuge vergrössernde Kräfte kompensiert.

Bevorzugt bilden die Raupen bzw. deren einzelne Glieder eine Endloskette, welche um entsprechende Umlenkrollen geführt ist. Dabei spielt die Zahl der Umlenkrollen keine Rolle, sie kann je nach Wunsch variiert werden.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in
Figur 1 eine schematisch dargestellte Seitenansicht einer erfindungsgemässen Vorrichtung zum Verbinden von zwei Werkstücken;
Figur 2 eine Draufsicht auf die Vorrichtung gemäss Figur 1.
Figur 3 eine schematisch dargestellte Draufsicht auf die Vorrichtung gemäss Figur 1 zum Verbinden von zwei weiteren Ausführungsbeispielen von Werkstücken;
Figur 4 eine als Strecke und als Diagramm dargestellte Geschwindigkeitssteuerung der Vorrichtung gemäss Figur 3.

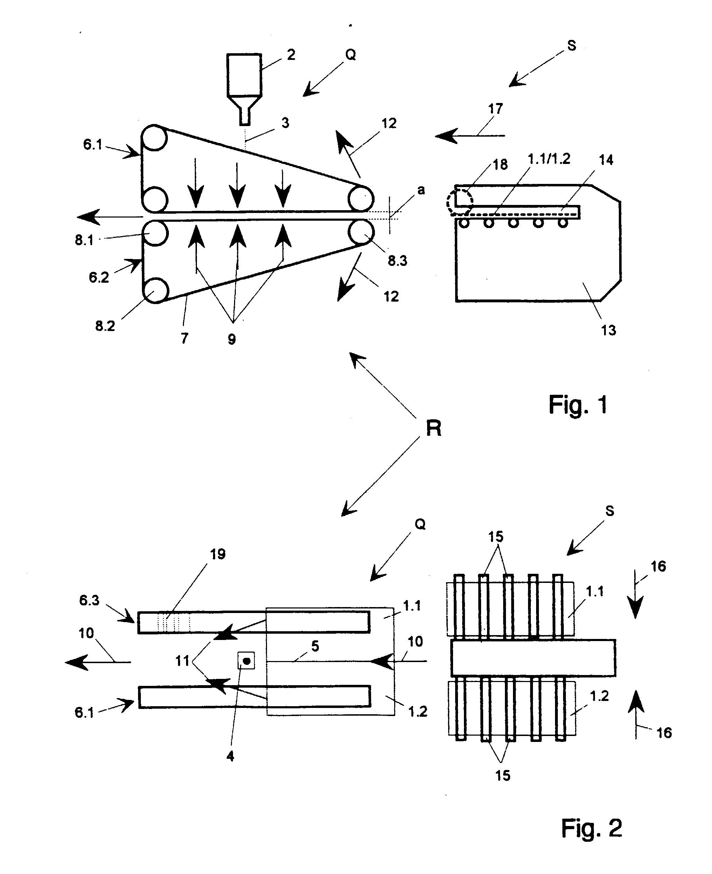

Eine erfindungsgemässe Vorrichtung R zum Verbinden von zwei Werkstücken 1.1 und 1.2 weist gemäss den Figuren 1 und 2 eine Zuführeinrichtung S für Werkstücke 1.1 und 1.2 sowie eine Schweisstation Q zum Verbinden der beiden Werk stücke 1.1 und 1.2 auf. Die Verbindung der beiden Werkstücke 1.1 und 1.2 geschieht mittels eines Lasers 2, der einen Laserstrahl 3 aussendet, wobei gegenüber dem Laser 2 ein Sensor 4 zum Erkennen des Laserstrahls 3 vorgesehen ist. Mit Hilfe des Lasers 2 werden die beiden Werkstücke 1.1 und 1.2 im Bereich einer Stossfuge 5 miteinander verschweisst.

Im vorliegenden Ausführungsbeispiel ist der Laser 2 feststehend ausgebildet, während die Werkstücke 1.1 und 1.2 gegenüber diesem Laser 2 bewegt werden, damit der Laserstrahl 3 entlang der Stossfuge 5 fährt. Zum Bewegen der Werkstücke 1.1 und 1.2 sind Raupen 6 vorgesehen. Jeweils zwei Raupen 6.1 und 6.2 sind übereinander angeordnet, wie dies in Figur 1 gezeigt ist. Ferner sind zwei Raupen 6.1 und 6.3 horizontal spiegelbildlich nebeneinander angeordnet, wie dies in Figur 2 dargestellt ist. Es versteht sich von selbst, dass auch neben der Raupe 6.2 eine weitere horizontale, nicht gezeigte Raupe vorgesehen ist.

Jede Raupe 6 weist ein Endlosband 7 auf, welches um Umlenkrollen 8.1, 8.2 und 8.3 geführt ist. Bevorzugt besteht jedes Endlosband 7 aus einer Vielzahl von Kettengliedern 19, die miteinander verbunden sind. Jedes Kettenglied 19 ist so ausgelegt, dass ein durch Pfeile 9 angedeuteter Druck auf die Werkstücke 1.1 und 1.2 ausgeübt wird. Durch diesen Druck werden die Werkstücke 1.1 und 1.2 fixiert und exakt geführt. Über die Länge der Druckstrecke können die auf die Werkstücke 1.1, 1.2 aufgebrachten Drücke je Kettenglied 19 unterschiedlich sein.

Ferner sind die Kettenglieder 19 so angestellt, dass sie beim Drehen des Endlosbandes 7 in Richtung auf eine Förderrichtung 10 hin verlaufen. Hierdurch erfolgt ein Bewegen der Werkstücke 1.1 und 1.2 zueinander, wie dies durch die Pfeile 11 angedeutet ist. Dies kann allerdings auch mittels seitlichen Kulissen, Schubplatten, Druckzylinder od.dgl. bewirkt werden.

Zur besseren Aufnahme der Werkstücke 1.1 und 1.2, d.h., auch zum tieferen Einführen der Werkstücke 1.1 und 1.2 zwischen die Raupen 6, kann es sich als günstig erweisen, wenn die der Zuführeinrichtung S zugewandten Umlenkrollen 8.3 bewegbar ausgestaltet sind. Durch eine Bewegung in Richtung der Pfeile 12 vergrössert sich ein Abstand a zwischen den Endlosbändern der Raupen 6, so dass die Werkstücke 1.1 und 1.2 tief zwischen die Raupen 6 eingeführt und so besser übernommen werden können.

Die Zuführeinrichtung S besteht aus einer Zange 13, welche einen Horizontalschlitz 14 aufweist. Beidseits des Horizontalschlitzes 14 sind Ablagerollen 15 vorgesehen, auf die die Werkstücke 1.1 und 1.2 aufgelegt werden. Nach der Auflage auf die Ablagerolle 15 werden die Werkstücke 1.1 und 1.2 in Richtung der Pfeile 16 zueinander in den Horizontalschlitz 14 gebracht, was durch beliebige Antriebseinrichtungen, beispielsweise Rollen od.dgl., geschehen kann.

Sobald die Werkstücke 1.1 und 1.2 in dem Horizontalschlitz 14 aufeinanderstossen, schliesst die Zange 13 den Schlitz 14, wobei die Werkstücke 1.1 und 1.2 eingeklemmt werden.

Zur Übergabe der Werkstücke 1.1 und 1.2 an die Schweissstation Q fährt die Zange 13 in Richtung der Förderrichtung 10, was durch den Pfeil 17 angedeutet ist. Im Bereich der Raupen 6 werden die Werkstücke 1.1 und 1.2 von den Raupen 6 übernommen und aus dem Horizontalschlitz 14 gezogen, wobei sich die Zange 13 gegebenenfalls öffnen kann.

Beim Herausziehen der Werkstücke 1.1 und 1.2 wird zumindest ein Werkstück 1.1 und 1.2 im Bereich der Stossfuge 5 profiliert, wie dies in der EP-A-565 846 vorgesehen ist. Hierzu ist an der Zange 13 eine Profilierrolle 18 vorgesehen.

Bevorzugt ist die Geschwindigkeit V₁ der Beladung der Zange 13 und die Übergabe an die Schweissstation Q schneller als das eigentliche Verbinden der beiden Werkstücke 1.1 und 1.2 durch Laserschweissen mit einer Geschwindigkeit V_{S}. Hierdurch wird ein kontinuierlicher Nachschub an zu verbindenden Werkstücken gewährleistet, so dass die gesamte Vorrichtung R kontinuierlich arbeitet.

Ferner kann auch eine nicht näher gezeigte Entnahme-einrichtung schneller mit einer Geschwindigkeit V₂ arbeiten, so dass die bereits verschweissten Platinen den Vorschub beim Schweissen nicht stören. Hierbei kann es sich als günstig erweisen, wenn auch ein Abstand b zwischen zwei sich gegenüberliegenden Rollen 8.1 im Auslaufbereich Schweissstation Q, der im gezeigten Ausführungsbeispiel dem Abstand a entspricht, veränderbar ist, so dass die verschweissten Platinen herausgenommen werden können.

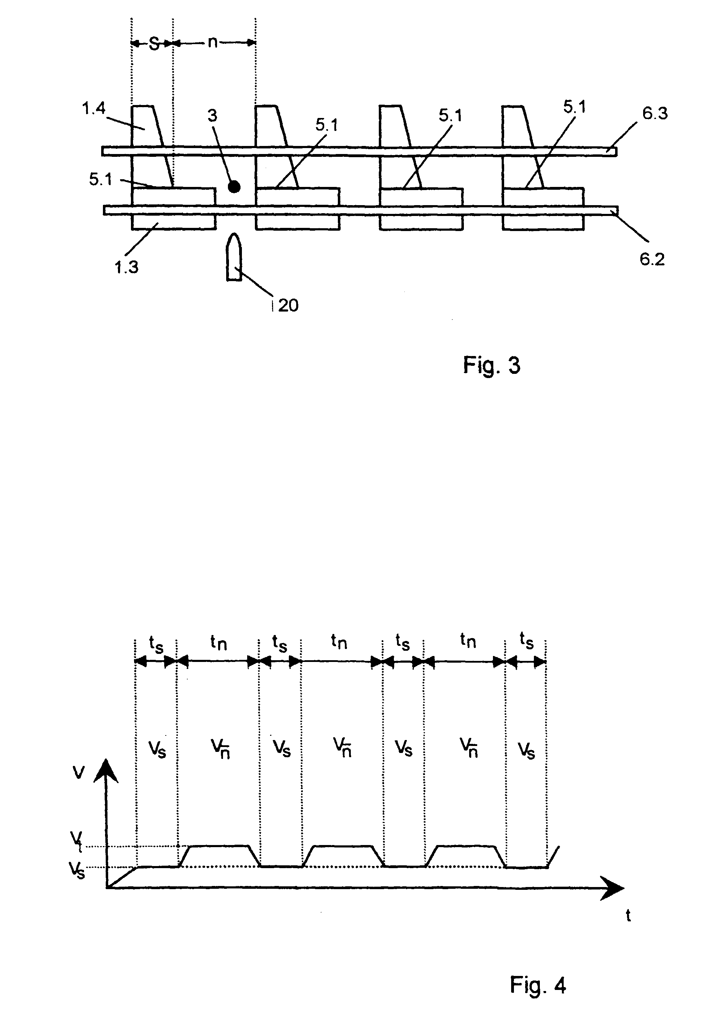

Erfindungsgemäss soll es aber auch möglich sein, die Raupen 6.1, 6.2, 6.3 mit wechselnden Geschwindigkeiten anzutreiben. Dies gilt vor allem, wenn Werkstücke 1.3 und 1.4 unterschiedlich ausgestaltet sind und die Länge der Stossfuge 5.1 geringer ist als die Länge von zumindest einem Werkstück 1.3. Dieser Fall ist in Figur 3 dargestellt. Eine Schweissstrecke s ist gegenüber einer Strecke n, in der nicht geschweisst wird, relativ gering. Das bedeutet, dass die Raupen 6.1, 6.2, 6.3 während dem Schweissvorgang mit einer Geschwindigkeit Vₛ, zwischen zwei Schweissvorgängen aber mit einer höheren Geschwindigkeit Vₙ betrieben werden. Diese Regelung ist in Figur 4 dargestellt.

Die Steuerung der Geschwindigkeit erfolgt so:

Die beiden zusammengefügten Werkstücke 1.3 und 1.4 werden von der Zuführeinrichtung S mit einer Geschwindigkeit V₁ der Schweissstation Q zugeführt. In der Station Q bewegen sich dann die Werkstücke 1.3 und 1.4 mit der Schweissgeschwindigkeit Vₛ weiter, solange eine Stossfuge 5.1 erkannt wird. Die Schweissgeschwindigkeit wird hauptsächlich durch das dünnere der beiden Werkstücke 1.3 und 1.4 bestimmt. Die Schweissgeschwindigkeit liegt heute bei ca. 2 bis 15 m/min. In der Regel dürfte die Schweissgeschwindigkeit Vₛ niedriqer sein als die Zuführgeschwindigkeit V₁.

Zum Umschalten von Zuführgeschwindigkeit V₁ auf Schweissgeschwindigkeit Vₛ dürfte es sich als ratsam erweisen, dem Laserstrahl 3 einen Sensor 20 zuzuordnen, der eine an dem Laserstrahl 3 ankommende Einheit aus den Werkstücken 1.3 und 1.4 erkennt.

Über den Laserstrahl 3 wird nunmehr eine Schweissnaht im Bereich der Stossfuge 5.1 hergestellt und hierdurch die beiden Werkstücke 1.3 und 1.4 zu einer Platine verbunden.

Nach der Herstellung der Schweissnaht 3 verlässt die Platine die Schweissstation Q mit einer Geschwindigkeit V₂. Diese Geschwindigkeit V₂ dürfte in der Regel wiederum höher als die Schweissgeschwindigkeit Vₛ sein, so dass ausserhalb der Station Q ein Handling sowohl der Platine als auch der Werkstücke 1.3 und 1.4 beschleunigt erfolgen kann und in jedem Fall immer genügend Werkstücke 1.3 und 1.4 zur Bearbeitung zur Verfügung stehen, so dass die Station Q durchgehend arbeiten kann.

Sowohl V₁ als auch V₂ können der Geschwindigkeit Vₙ entsprechen, mit der die Raupen 6.1, 6.2, 6.3 zwischen zwei Schweissvorgängen betrieben werden. Dies ist vor allem dann möglich, wenn sowohl der Abstand a der beiden hinteren Umlenkrollen 8.3 als auch der Abstand b der beiden vorderen Umlenkrollen 8.1 veränderbar ist. D.h., die Raupen 6.1, 6.2, 6.3 öffnen immer dann, wenn kein Schweissen stattfindet, so dass geschweisste Platinen tiefer aus der Vorrichtung entnommen bzw. neue Werkstücke tiefer in die Vorrichtung eingelegt werden können.

## Patentansprüche

1. Verfahren zum Verbinden von zwei Werkstücken (1) durch eine Schweissnaht, wobei die Werkstücke (1) in einer Schweisstation (Q) zwischen gegeneinander laufenden, aus einer Mehrzahl von Gliedern (19) bestehenden Raupen (6) gehalten werden, welche Umlenkrollen (8) in lediglich einer Förderrichtung (10) umlaufen,
dadurch gekennzeichnet,
dass zum Einschieben der Werkstücke (1) zwischen die Raupen (6) ein Abstand (a) des in der Förderrichtung (10) ersten-Abschnitts der Raupen beim Einführen der Werkstücke (1) zwischen die Raupen (6) vergrössert und nach Erreichen der Einschubposition des Werkstückes (1) zwischen den Raupen (6) unter Klemmung der Werkstücke entlang der ganzen eingeschobenen Länge wieder zurückgenommen wird.

2. Verfahren nach Anspruch 1, dadurch gekennzeichnet, dass die Raupen (6) zwischen zwei Schweissvorgängen mit einer von einer Schweissgeschwindigkeit (Vₛ) unterschiedlichen Geschwindigkeit (Vₙ) betrieben werden.

3. Verfahren nach Anspruch 2, dadurch gekennzeichnet, dass die Geschwindigkeit (Vₙ) grösser als die Schweissgeschwindigkeit ist.

4. Verfahren nach einem der Ansprüche 1 bis 3, dadurch gekennzeichnet, dass ein Abstand (b) der in Förderrichtung (10) dem Schweissvorgang nachfolgenden Umlenkrollen (8.1) zum Entnehmen von geschweissten Werkstücken (1.1, 1.2 bzw. 1.3, 1.4) verändert wird.

5. Verfahren nach einem der Ansprüche 1 bis 4, dadurch gekennzeichnet, dass die Werkstücke (1) der Schweisstation (Q) mit einer von der Schweissgeschwindigkeit (Vₛ) unterschiedliche Geschwindigkeit (V₁) den Raupen (6) zugeführt werden.

6. Verfahren nach einem der Ansprüche 1 bis 5, dadurch gekennzeichnet, dass die zusammengeschweissten Werkstücke (1.1, 1.2 bzw. 1.3, 1.4) mit einer von der Schweiss-geschwindigkeit (Vₛ) unterschiedlichen Geschwindigkeit (V₂) aus den Raupen (6) entnommen werden.

7. Verfahren nach Anspruch 5 oder 6, dadurch gekennzeichnet, dass die Zuführgeschwindigkeit (V₁) und die Entnahmegeschwindigkeit (V₂) in etwa der Geschwindigkeit (Vₙ) der Raupen (6) zwischen zwei Schweissvorgängen entspricht.

8. Vorrichtung zur Durchführung des Verfahrens nach einem der Ansprüche 1 bis 7, mit einer Schweissstation (Q) und umlaufenden Raupen (6) zum Transport zu verschweissender Bleche durch die Schweissstation (Q), dadurch gekennzeichnet, dass Raupenglieder des in Förderrichtung ersten Abschnitts der Raupen in ihrem gegenseitigen Abstand zur Aufnahme zu verschweissender Bleche verstellbar ausgebildet sind.

9. Vorrichtung nach Anspruch 8 dadurch gekennzeichnet, dass zum Verbinden von zwei Werkstücken (1) durch eine Schweissnaht, wobei die Werkstücke (1) zwischen gegeneinander laufenden Raupen (6) gehalten sind, welche Umlenkrollen (8) in einer Förderrichtung (10) umlaufen, wobei jede Raupe (6) aus einer Mehrzahl von Gliedern (19) besteht, die einzelnen Glieder (19) mit unterschiedlichem Druck (9) beaufschlagbar sind.

10. Vorrichtung nach Anspruch 9, dadurch gekennzeichnet, dass die Glieder (19) zum Minimieren einer Stossfuge (5) zwischen den Werkstücken (1) zur Förderrichtung (10) hin angestellt bzw. quer oder senkrecht zur Förderrichtung (10) verschiebbar bzw. kraftbeaufschlagt sind.

11. Vorrichtung nach Anspruch 9 oder 10, dadurch gekennzeichnet, dass die Raupen (6) Teil einer Schweissstation (Q) sind, der eine Zuführeinrichtung (S) zum Zuführen der Werkstücke (1) zugeordnet ist.

12. Vorrichtung nach Anspruch 11, dadurch gekennzeichnet, dass die Zuführeinrichtung (S) in Richtung (17) zur Schweisstation (Q) hin verfahrbar ist.

13. Vorrichtung nach Anspruch 11 oder 12, dadurch gekennzeichnet, dass die Zuführeinrichtung (S) eine Zange (13) mit einem Schlitz (14) zur Aufnahme und zum Klemmen der Werkstücke (1) aufweist.

14. Vorrichtung nach Anspruch 13, dadurch gekennzeichnet, dass beidseits des Schlitzes (14) Ablagerollen (15) für die Werkstücke (1) vorgesehen sind.

15. Vorrichtung nach einem der Ansprüche 11 bis 14, dadurch gekennzeichnet, dass der Zuführeinrichtung (S) eine Profilierrolle (18) zugeordnet ist.

## Claims

1. Method for joining two workpieces (1) together by a welded seam, in which the workpieces (1) are held in a welding station (Q) between contrarotating caterpillars (6) consisting of a plurality of link pads (19) running around deflecting rollers (8) in a single conveying direction (10),
characterized in that
to allow the workpieces (1) to be inserted between the caterpillars, a clearance (a) in the section of the caterpillars which is first in the conveying direction (10) is increased upon introduction of the workpieces (1) between the caterpillars (6), and after the workpiece (1) has reached the inserted position between the caterpillars (6) [said clearance] is reduced again so that the workpieces are clamped along their entire inserted length.

2. Method according to Claim 1, characterized in that the caterpillars (6) are driven between welding operations at a different rate of travel (Vₙ) from the welding rate of travel (Vₛ).

3. Method according to Claim 2, characterized in that the rate of travel (Vₙ) is higher than the welding rate of travel.

4. Method according to any one of Claims 1 to 3, characterized in that a clearance (b) between the deflecting rollers (8.1) which in the conveying direction (10) come after the welding operation is changed for removal of welded workpieces (1.1, 1.2; 1.3, 1.4).

5. Method according to any one of Claims 1 to 4, characterized in that the workpieces (1) [for] the welding station (Q) are fed to the caterpillars (6) at a different rate of travel (V₁) from the welding rate of travel (Vₛ).

6. Method according to any one of Claims 1 to 5, characterized in that, after welding, the workpieces (1.1, 1.2; 1.3, 1.4) are removed from the caterpillars (6) at a different rate of travel (V₂) from the welding rate of travel (Vₛ).

7. Method according to Claim 5 or 6, characterized in that the feed rate of travel (V₁) and the removal rate of travel (V₂) are approximately equal to the rate of travel (Vₙ) of the caterpillars (6) between welding operations.

8. Apparatus for carrying out the method according to any one of Claims 1 to 7, with a welding station (Q) and endless caterpillars (6) for conveying sheet metal components through the welding station (Q), characterized in that the space between links of the section of the caterpillars which is first in the conveying direction is made variable to accommodate the sheet metal components to be welded.

9. Apparatus according to Claim 8 characterized in that to join two workpieces (1) by a welded seam, said workpieces (1) being held between contrarotating caterpillars (6) running around deflecting rollers (8) in one conveying direction (10) [and] each caterpillar (6) consisting of a plurality of link pads (19), the individual links (19) can be subjected to different pressures (9).

10. Apparatus according to Claim 9, characterized in that to minimize a joint gap (5) between the workpieces (1) the link pads (19) are set [at an angle] to the conveying direction (10) and/or are displaceable and/or subjected to force transversely or perpendicularly with respect to the conveying direction (10).

11. Apparatus according to Claim 9 or 10, characterized in that the caterpillars (6) are part of a welding station (Q) supplied with workpieces (1) by a feed unit (S).

12. Apparatus according to Claim 11, characterized in that the feed unit (S) is traversable in the direction (17) towards the welding station (Q).

13. Apparatus according to Claim 11 or 12, characterized in that the feed unit (S) has a manipulator (13) with a slit (14) to receive and clamp the workpieces (1).

14. Apparatus according to Claim 13, characterized in that receiving rollers (15) for the workpieces (1) are provided on both sides of the slit (14).

15. Apparatus according to any one of Claims 11 to 14, characterized in that a profiling roller (18) co-operates with the feed unit (S).

## Revendications

1. Procédé pour joindre deux pièces (1) par un cordon de soudure, les pièces (1) étant maintenues dans un poste de soudage (Q) entre des chenilles (6) circulant l'une contre l'autre et constituées d'une pluralité d'éléments (19), qui circulent autour de poulies de renvoi (8) dans une seule direction de transport (10),
**caractérisé** en ce que, pour insérer les pièces (1) entre les chenilles (6), l'écartement (a) du premier tronçon des chenilles dans la direction de transport (10) est augmenté lors de l'introduction des pièces (1) entre les chenilles (6) et, une fois atteinte la position d'insertion des pièces (1) entre les chenilles (6), est repris avec serrage des pièces sur toute la longueur d'insertion,

2. Procédé selon la revendication 1, **caractérisé** en ce qu'on fait fonctionner les chenilles (6), entre deux processus de soudage, à une vitesse (Vₙ) différente de la vitesse de soudage (Vₛ).

3. Procédé selon la revendication 2, **caractérisé** en ce que la vitesse (Vₙ) est supérieure à la vitesse de soudage.

4. Procédé selon l'une quelconque des revendications 1 à 3, **caractérisé** en ce que l'écartement (b) des poulies de renvoi (8.1) consécutives au processus de soudage dans la direction de transport (10) est modifié afin de retirer les pièces soudées (respectivement 1.1, 1.2 ou 1.3, 1.4).

5. Procédé selon l'une quelconque des revendications 1 à 4, **caractérisé** en ce que les pièces (1) sont apportées aux chenilles (6) du poste de soudage (Q) avec une vitesse (V₁) différente de la vitesse de soudage (Vₛ).

6. Procédé selon l'une quelconque des revendications 1 à 5, **caractérisé** en ce que les pièces jointes par soudage (respectivement 1.1, 1.2 ou 1.3, 1.4) sont retirées des chenilles (6) avec une vitesse (V₂) différente de la vitesse de soudage (Vₛ).

7. Procédé selon la revendication 5 ou 6, **caractérisé** en ce que la vitesse d'alimentation (V₁) et la vitesse d'enlèvement (V₂) correspondent environ à la vitesse (Vₙ) des chenilles (6) entre deux processus de soudage.

8. Dispositif pour la mise en oeuvre du procédé selon l'une quelconque des revendications 1 à 7, comprenant un poste de soudage (Q) et des chenilles circulantes (6) pour le transport de tôles à souder à travers le poste de soudage (Q), **caractérisé** en ce que les éléments du premier tronçon des chenilles dans la direction de transport sont réalisés avec possibilité de réglage de leur écartement mutuel afin de recevoir des tôles à joindre par soudage.

9. Dispositif selon la revendication 8, **caractérisé** en ce que, afin de joindre deux pièces (1) par un cordon de soudure, les pièces (1) sont maintenues entre des chenilles (6) circulant l'une contre l'autre, qui circulent autour de poulies de renvoi (8) dans une direction de transport (10), chaque chenille (6) étant constituée d'une pluralité d'éléments (19) et les éléments (19) individuels pouvant être sollicités avec une pression (9) différente.

10. Dispositif selon la revendication 9, **caractérisé** en ce que les éléments (19) sont réglés vers la direction de transport (10) afin de minimiser le joint (5) entre les pièces (1), ou encore peuvent être déplacés ou sollicités en force transversalement ou perpendiculairement à la direction de transport (10).

11. Dispositif selon la revendication 9 ou 10, **caractérisé** en ce que les chenilles (6) font partie d'un poste de soudage (Q) auquel est associé un équipement d'alimentation (S) pour apporter les pièces (1).

12. Dispositif selon la revendication 11, **caractérisé** en ce que l'équipement d'alimentation (S) peut être déplacé en direction (17) du poste de soudage (Q).

13. Dispositif selon la revendication 11 ou 12, **caractérisé** en ce que l'équipement d'alimentation (S) comporte une pince (13) pourvue d'une fente (14) pour recevoir et pour serrer les pièces (1).

14. Dispositif selon la revendication 13, **caractérisé** en ce que des rouleaux de dépose (15) pour les pièces (1) sont prévus de part et d'autre de la fente (14).

15. Dispositif selon l'une quelconque des revendications 11 à 14, **caractérisé** en ce qu'un rouleau de profilage (18) est associé à l'équipement d'alimentation (S).
